# EUROPEAN PATENT SPECIFICATION

(11) **EP 0 620 139 B1**
(45) Date of publication and mention of the grant of the patent: **17.11.1999**
(21) Application number: 94302028.9
(22) Date of filing: 22.03.1994
(51) Int. Cl.: B60R 21/20, B60R 21/28

(54) **Inflatable restraint system reaction canister with integral inflator chamber**
Reaktionsgehäuse eines aufblasbaren Rückhaltesystems mit integriertem Ausblasvorrichtungsraum
Boîtier de réaction d'un système de retenue gonflable à chambre de gonfleur intégrée

(30) Priority: 13.04.1993 US 43960; 12.04.1993 US 46692
(43) Date of publication of application: 19.10.1994
(73) Proprietor: AUTOLIV ASP, INC., Ogden, Utah 84405 (US)
(72) Inventor: Lauritzen, Donald R., Hyrum Utah 84319 (US); Rose, Larry D., Layton Utah 84041 (US)
(74) Representative: Bankes, Stephen Charles Digby

(56) References cited:
- EP-A- 0 496 267
- EP-A- 0 529 304
- EP-A- 0 558 240
- US-A- 4 941 678

## Description

### BACKGROUND OF THE INVENTION

This invention relates generally to inflatable passive restraint systems such as used in motor vehicles to restrain the movement of a seated occupant during a collision. One aspect of the invention is more particularly directed to an improvement in the design of an air bag module used in such restraint systems to minimize deformation of the module and possible damage to the dashboard and/or instrument panel of a vehicle with the deployment of the air bag. Such improvement is in the structure internal to the module for a) housing and positioning the inflator and the air bag and b) directing the inflating gas flow or jet for best deployment of the air bag.

In another aspect, the invention more particularly relates to an improvement in the structure used in such systems for housing a gas generation material and an inflatable bag to further reduce the weight of the assembly and to permit the more effective and economical incorporation therein of various design features.

Some terminology herein is used for convenience in reference only and is not intended to be limiting. The words "forwardly" and "rearwardly" refer to the normal forward and reverse directions of travel of the vehicle to which a passenger passive restraint module is attached. The phrase "thrust neutral" refers to the production by an inflator of zero thrust when initiated as, for example, during a deployment event or accidentally such as during shipping, storage, or handling thereof. That is to say, the gas discharge openings in the inflator are so positioned that the gas is discharged in opposing directions whereby there are no resulting forces tending to cause physical movement of the inflator. Hence, the inflator will expend the energy generated thereby, generally in place.

The state of the prior art is indicated by the following U.S. patents:

| Patent No. | Issue Date | Patentee |
|---|---|---|
| 3,414,292 | December 3, 1968 | S. Oldberg et al. |
| 3,715,131 | February 6, 1973 | E.K. Hurley et al. |
| 3,880,447 | April 29, 1975 | W.F. Thorn et al. |
| 4,332,398 | June 1, 1982 | G.R. Smith |
| 4,817,828 | April 4, 1989 | G.W. Goetz |
| 4,842,300 | June 27, 1989 | J.F. Zionmek et al. |
| 4,941,678 | July 17, 1990 | D.R. Lauritzen et al. |
| 5,259,643 | November 9, 1993 | J. Kraft et al |

The Oldberg et al. patent discloses a safety device for providing protection for vehicle passengers comprising a folded inflatable crash bag closely surrounding an elongated cylindrical diffuser member, being secured thereto by clamps. The diffuser member defines a chamber in which an inflator comprising a fluid reservoir in an inner container is concentrically located. For providing a tight seal the inner container is seam welded at the opposite ends thereof to the diffuser member. When activated by explosive means, fluid from the reservoir flows rearwardly from one side only of the inflator against an adjacent inner wall of the diffuser member. The flow divides and is discharged forwardly through a single row of longitudinally spaced apart openings, that are provided on one side only of the diffuser member, against a fixed baffle member. The baffle member divides and redirects the fluid rearwardly into the inflatable bag.

In the fabrication and assembly of inflatable devices for protecting vehicle passengers, the inflator poses a large potential hazard. Accidental initiation thereof during shipping, storing and installation in the safety device could result in injury to personnel and also cause property damage, particularly when the inflator is not of the thrust neutral type. Thus, in order to minimize the possibility of such injury and damage, it is desirable to reduce the amount of handling to which the inflator is subjected during the fabrication and assembly of the safety device. Installation of the inflator as a last operation in the assembly of the device would provide a substantial reduction in the risk of injury and damage. With the use of an inflator of the thrust neutral type, the risk of such injury and damage would be further reduced.

The construction of the Oldberg et al. safety device is such as to preclude installation of the inflator as a last operation of the assembly of the device. Specifically, the inflatable bag is provided in closely surrounding relation to the diffuser member, with the inflator, that is, the inner container, welded at the ends thereof to the diffuser member. Moreover, with fluid flowing from the reservoir of fluid from one side only of the inflator and from one side only of the diffuser member, neither the inflator alone, nor the inflator and diffuser member, as a unit, are thrust neutral.

The Hurley et al. patent discloses a folded inflatable bag surrounding a gas generator having a head assembly of cylindrical shape provided with a closed end and an open aft end that is closed by a closure plate. A centrally positioned orifice that is normally closed by a rupture disc is provided in the closure plate. Enclosing the cylindrical portion of the head assembly is a concentrically positioned diffuser having a closed end in the shape of a dished head, thereby providing an annular cavity about the gas generator. Upon initiation of the gas generator, the rupture disc releases, in response to pressure in the head assembly exceeding the burst pressure of the disc, thereby allowing the generated gas to flow out of the orifice in the closure plate of the aft end of the gas generator and to impinge on the inner wall at the end of the diffuser. This causes the gas to be dispersed into the annular cavity and out of a plurality of openings spaced around the wall of the diffuser. With the generated gas flowing out of the aft end of the gas generator, the operation thereof is not thrust neutral. Nor does the Hurley construction allow fabrication of the device with the installation of the gas generator as a last operation of the assembly.

The Thorn et al. patent discloses a folded inflatable bag positioned in close contact with an elongated cylindrical gas generator. The gas generator is provided with rows of gas outlet ports that extend 360° around the cylinder. The gas is discharged in opposing directions and produces counteracting thrusts, and thus, is thrust neutral. A gas redirecting plate in the shape of a half cylindrical container is positioned in spaced relation around the forwardly facing portion of the gas generator. The plate redirects forwardly discharged inflating gas in a rearward direction into the inflatable bag. Redirected gas together with gas that directly is discharged into the inflatable bag deploy the bag, which normally is folded, to an inflated condition. In the stored position thereof, the bag is positioned closely adjacent to and in contact with the rearward half side of the gas generator. This precludes installation of the gas generator as a last operation in the assembly of the apparatus.

The Smith patent discloses an inflatable restraint system including a folded inflatable cushion, a concentric elongated cylinder inflator-diffuser combination, and an elongated horizontally orientated nozzle. The inflator and diffuser are located within the confines of the folded cushion and are connected as a unit to the side walls of a housing therefor by means of bolts which extend into tapped bosses, which bosses are rigid with the combined unit. Consequently, neither the combined unit, nor the inflator can be installed as a last operation in the assembly of the system.

In the Goetz patent an elongated cylindrical inflator and a folded air bag are mounted in a rigid reaction canister which is fixed to the dashboard of a vehicle, with the orientation and arrangement of gas discharge openings or exhaust ports in the inflator being such that, when activated, an initial flow generated gas is directed rearwardly by the inflator to inflate the bag. Excess gas flows from the inflator in a forward direction into the surrounding environment. This result is achieved by using rupturable foil layers to close both forwardly and rearwardly directed inflator exhaust ports, with rupturing of the rearwardly directed ports occurring at a pre-selected pressure that is lower than the pressure at which the forwardly directed ports rupture. Thus, the inflator is not thrust neutral, nor is it capable of installation as a last operation of the assembly of the apparatus because of the positioning in the reaction canister of the folded air bag in close proximity to the inflator.

As disclosed in the Goetz patent and the other aforementioned prior art patents, it is known in prior art installations to provide a container to house the air bag and the inflator. The container is generally referred to as a reaction canister and provides a medium for installing and retaining a module in the instrument panel by the utilization of suitable brackets.

The reaction canister provides protection for the inflator, the diffuser, if provided, and the air bag until the time of deployment of the bag. Additionally, the reaction canister absorbs the loads that are produced upon deployment of the bag, which loads, typically, are large. Unless sufficiently absorbed, such loads can cause serious damage to the interior of the vehicle, and in particular, to the instrument panel.

A drawback to the use of a reaction canister in an air bag module for passenger protection is the envelope in the dashboard or instrument panel that is allotted for the installation of the module. Resulting restrictions, usually in height, causes lengthened, that is, deeper, top and bottom panels in order to accommodate the folded volume of the air bag. The bag is then restricted for unfolding and must travel rearwardly a distance greater than desirable before unfolding. Because of the large amount of gas that is produced and the distance the bag needs to travel before unfolding, pressure builds up in the reaction canister to a level that tends to expand the canister and cause it to bulge. This condition, known as bell mouthing, is very destructive of the instrument panel, and is particularly objectionable in low speed crashes where other damage to the vehicle is small.

The Zionmek et al. patent and the Lauritzen et al. patent disclose the use of a tether strap to resist the spreading forces on the reaction canister and thereby preclude bell mouthing upon deployment of the air bag. This technique allows the use of lighter weight and less expensive reaction canisters. The structural arrangement, however, leaves something to be desired in respect of the introduction of undesirable complication into the manufacturing and assembling operations, and moreover, does not allow installation of the inflator as a last operation in the assembly of the module.

The Kraft et al patent discloses a vehicle occupant restraint system in which an airbag is folded into the mouth of a reaction canister inside which a separate inflator is situated. The inflator comprises a body with a cylindrical recess in which gas generant material is situated and an adjacent chamber containing two filters through which hot gases flow upon actuation of the inflator.

Patent EP-A-0 558 240 claims a priority date of 24 February 1992, was published on 1 September 1993 and is accordingly prior art under the provisions of EPC Article 54(3) for the purposes of novelty only. This patent discloses a vehicle occupant restraint system having an extruded reaction canister which has integrally formed therewith an enclosed tubular diffuser tube. A separate inflator having a body adapted to withstand the high pressure which is produced by the ignition of gas generant material contained therein is positioned inside the integrally formed diffuser tube.

Thus, in general, air bag module assemblies of the prior art generally include three basic components: 1) a cushion or air bag that is inflated with gas such as when the vehicle encounters a sudden deceleration, 2) an inflator which upon actuation serves to provide the gas used to inflate the air bag, and 3) a reaction canister which typically functions as a structural housing supporting both the inflator and the air bag while providing a mounting base for installation of the assembly in a vehicle and direction to the gas resulting from the inflator.

In general, because of the relatively high pressures generated in conventional inflators, e.g., pyrotechnic inflators commonly produce pressures in the range of about 103-207 bar (1500-3000 psi), the walls of such inflators are typically fabricated of relatively thick material to provide additional strength thereto. However, as described above, in conventional air bag module assemblies, the inflator is typically housed within a walled reaction canister. The use of such thick walled inflators housed within a walled reaction housing typically results in an assembly of greater weight than is optimally desired.

Further, as reaction canisters are commonly fabricated using formed and/or welded steel, such fabrication techniques are not conducive to the economical and effective incorporation therein of various desired features, such as various mounting or attachment preparations, for example, in particular vehicular inflatable restraint system design applications.

Still further, an increasing emphasis on weight reduction in automobiles has created a need and a demand for a lighter weight inflatable restraint system.

Thus, there is a need and a demand for an improved reaction canister for use in an air bag module for the passenger side of a vehicle.

A general object of another aspect of the invention is to provide an improved structure for use in housing a gas generant material and in housing and positioning an inflatable bag in an inflatable passive restraint system.

Another object of the invention is to provide a reaction canister structure having an integral chamber for housing a gas generant material.

A more specific objective of this aspect of the invention is to overcome one or more of the problems described above.

The general object of this aspect of the invention can be attained, at least in part, through a specifically shaped and/or formed body part for an inflatable passive restraint system reaction canister. The body part is formed by extrusion and is trough-shaped. The body part includes first and second opposite side walls and an integrally shaped inflator chamber having gas exit vents along at least one side thereof. The body part has first and second opposite ends with a plurality of end closure attachment preparations at each of the opposite ends.

The air bag module assemblies of the prior art generally include a thick walled inflator housed within a walled reaction canister and thereby undesirably increase the weight of the assembly. Further, the fabrication of reaction canisters using conventional machine tooling operations is not conducive to the economical and effective incorporation of various desired features, such as various mounting or attachment preparations, for example, in particular vehicular inflatable restraint system design applications.

The invention further comprehends a reaction canister for an inflatable passive restraint system. The reaction canister includes a specifically shaped and/or formed body part having first and second opposite side walls and an integrally shaped inflator chamber having gas exit vents along at least one side of the chamber. The body part further includes first and second opposite ends with a plurality of end closure attachment preparations at each of the said opposite ends. The reaction canister further includes first and second end closures attached to a respectively associated opposite end of the body part by means positioned in cooperative relation with the respective end closure attachment preparations. Each end closure further include an inflator chamber base portion positioned to receive an associated one of the ends of the integrally shaped inflator chamber of the body part.

The invention still further comprehends a reaction canister for an inflatable passive restraint system comprising an extruded aluminum trough-shaped body part, an air bag retainer/diffuser attached to the reaction canister body part, and first and second end closures. The body part includes first and second opposite side walls and an integrally shaped inflator chamber having gas exit vents along at least one side thereof. The body part further includes at least one integrally formed mounting portion of an external type for mounting of the reaction canister body part into a vehicle. The body part has first and second opposite ends with a plurality of end closure attachment preparations at each opposite end. Further, at least one of the side walls is formed continuously with the integrally shaped inflator chamber via a side wall connecting portion forming at least one gas cooling cavity therein. The side wall connecting portion includes at least one vent hole to permit venting of gas from the reaction canister and the gas cooling cavity contains a thermal conductive material of aluminum wool to facilitate cooling of vented gas. The reaction canister body part additionally includes at least one attachment sleeve preparation adapted for the attachment of the air bag retainer/diffuser to the reaction canister body part. The air bag retainer/diffuser is attached to the reaction canister body part by insert means positioned in cooperative relation with the attachment sleeve preparation. The first and second end closures are attached to a respectively associated opposite end of the body part by screw means positioned in cooperative relation with the respective end closure attachment preparations. Each of the first and second end closures further having an inflator chamber base portion positioned to receive an associated one of the ends of the integrally shaped inflator chamber of the body part, wherein at least one of the end closures includes an end plate and an end base.

As used herein, references to side wall or panel portions of the body part of the reaction canister being "top" or "bottom" are to be generally understood to be relative terms and in reference to the reaction canister as it is commonly installed in a vehicle. Other objects and advantages will be apparent to those skilled in the art from the following detailed description taken in conjunction with the appended claims and drawings.

A detailed description of the invention follows with reference to the accompanying drawings which form part of the specification, of which:
FIG. 1 is a cross sectional view of a reaction canister body part with an integral inflator chamber, in accordance with one embodiment of the invention;
FIG. 2 is an exploded perspective view of an air bag module assembly in general accordance with one embodiment of the invention, having a reaction canister body part with an integral inflator chamber, as shown in Fig. 1; and
FIG. 3 is a cross sectional side view of the assembled air bag module assembly of Fig. 2 and showing the inclusion of a) a thermal conductive material within the cooling cavities and b) a protective cover about the outer periphery of the reaction canister air bag retaining cavity.

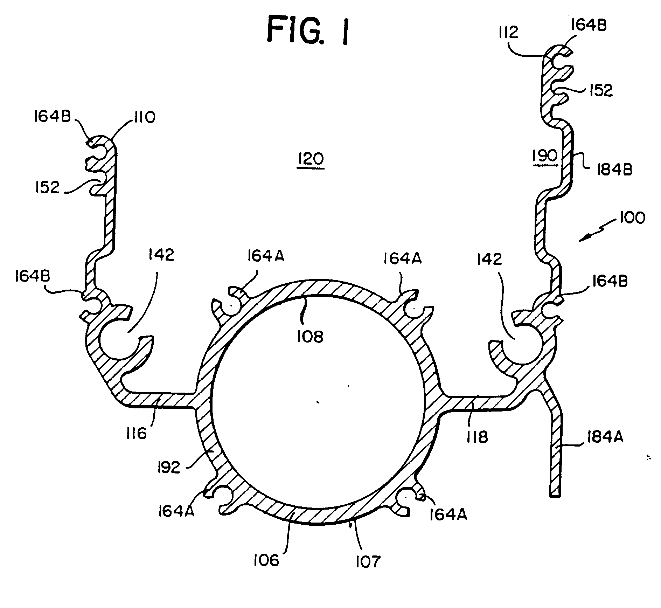

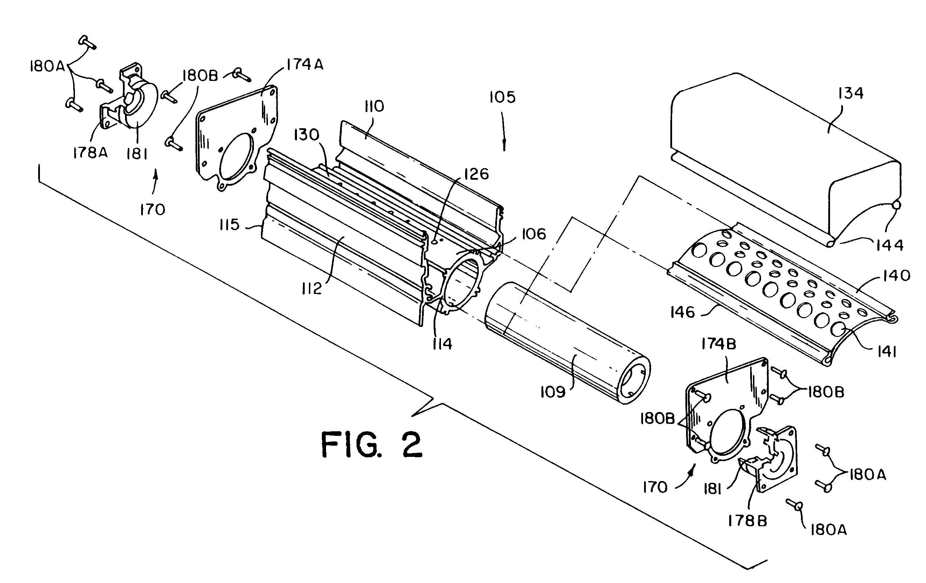

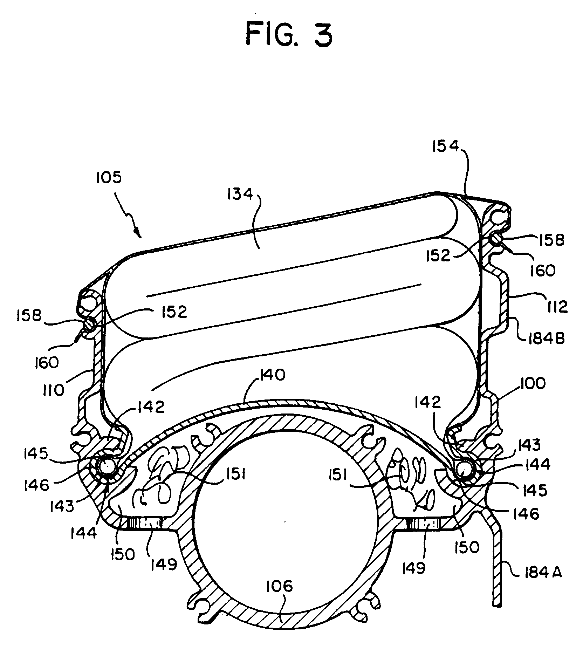

FIGS. 1- 3 illustrate another aspect of the invention. These figures illustrate an extruded reaction canister or, more briefly, can body part, generally designated by the reference numeral 100, which includes the general form of a long, narrow, open receptacle or trough. The reaction canister body part 100 is shown separately in FIG. 1 and as a part of an air bag module assembly, generally designated by the reference numeral 105, in FIGS. 2 and 3.

The reaction canister body part 100 includes an integrally shaped inflator chamber 106 having an exterior surface 107 and an interior surface 108 and, like inflator chambers that are commonly included in inflators designed and used in air bag module assemblies, can serve to house a gas generant material, such as commonly associated with pyrotechnic inflators, such as a gas generant pack 109, as shown in FIG. 2.

An inflator chamber in the form of a tube having a circular cross section, as shown by the inflator chamber 106, will generally be preferred as such a structure is generally best suited for use in such applications wherein the chamber must withstand such pressure operation. It is to be understood, however, that in the practice of the invention, if desired, other shapes or forms of inflator chamber can be used.

The internal components of the inflator chamber 106 and the composition and form of the gas generant material housed therein form no part of the present invention and may be any of a number of known constructions/formulations such as are commercially available. As discussed above and by way of example and not limitation, such internal components may comprise that disclosed in commonly assigned U.S. Patent No. 4,890,860 granted to F. E. Schneiter on January 2, 1990.

Turning to FIGS. 1-3, the reaction canister body part 100 includes first and second opposite side walls or panels, e.g., a top side wall and a bottom side wall, 110 and 112, respectively, and first and second opposite ends, 114 and 115, respectively. The side walls can, for example, be formed directly continuous with the integrally shaped inflator chamber 106 or, as shown, continuously formed therewith via side wall connecting portions 116 and 118, respectively.

The side walls 110 and 112, respectively, can generally be spaced apart so as to form an air bag retaining cavity, generally designated by the reference numeral 120, therebetween. In one preferred embodiment and as shown in the figures, the spaced apart side walls are generally parallel to each other, ensuring a more uniformly shaped air bag retaining cavity and thereby reducing the possibility of the air bag housed within the cavity therebetween undesirably getting caught or snagged such as by a protruding surface or edge of the reaction canister body part. It is to be understood, however, that the side walls can be otherwise angularly positioned relative to one another as may be desired in specific applications, such as to permit the accommodation of the reaction canister into a specifically shaped dash board or instrument panel opening.

In the illustrated embodiment, the side walls 110 and 112 are shown as being of different lengths, with the bottom side wall 112 being of a longer length than the top side wall 110. In general, it has been found that reaction canisters so shaped can more conveniently be incorporated within the dash board/instrument panel of most common automotive vehicles. It is to be understood, however, that the invention is not limited to use in conjunction with reaction canister side walls of such relative length. That is, the invention can similarly be used in conjunction with reaction canister body parts having side walls of similar lengths as well as reaction canister body parts wherein the length of the top side wall exceeds that of the bottom side wall.

As shown in FIG. 2, the inflator chamber 106 includes gas exit vents or ports 126 along a side 130 thereof. Such gas exit vents permit the gas generated within the inflation chamber to exit from the chamber and be directed for inflation of an air bag 134, as can more easily be seen by reference to FIGS. 2 and 3.

To assist in producing or forming a more uniform or orderly distribution of gas into the inflating air bag and whereby a more uniformly and/or orderly deployment of the inflating air bag can be effected, one or more flow directing devices can be incorporated within the reaction canister assembly. For example, such flow directing devices can take the shape or form of baffles or gas port passages of particular size, shape and/or arrangement.

In one preferred embodiment of the invention, such flow directing devices can take the form of and/or include an air bag retainer/diffuser device 140, as shown in FIGS. 2 and 3. The air bag retainer/diffuser device 140 includes a plurality of openings 141 therein to permit the passage of gas therethrough. The openings 141 are located and sized so as to provide a desired distribution of gas into the air bag 134.

A preferred such device or system for use in the practice of the invention is a retainer device/system incorporating a diffuser the size, geometry, and arrangement of the gas passage openings in which can be appropriately designed to satisfy specific application needs and the invention is not necessarily limited to use with a diffuser with gas passage openings of any specific configuration. Further, a diffuser device/system, in addition to fostering desired gas diffusion can also assist in: 1) facilitating module assembly; 2) maintaining proper air bag retention within the assembly, and 3) maintaining desired separation of the hot inflator surfaces from both the surface of the air bag as well as from contact by the vehicle occupants For example, relative to the retaining of an air bag within the assembly, a means of retaining an air bag can advantageously avoid or minimize the need for conventional fastener devices such as screws or rivets, for example.

In addition, a diffuser device/system, such as the diffuser 140, can serve to facilitate control of bell mouthing of the reaction canister, thereby assisting in maintaining the integrity of the reaction canister.

To that end, the reaction canister body part 100 includes, as a part of the side walls 110 and 112, integrally formed attachment sleeves 142. As will be described in more detail below with reference to FIGS. 2 and 3, such attachment sleeves allow for the fastenerless attachment of an air bag within an inflatable safety system. It is to be understood, however, that the practice of the subject invention in its broader aspects is not limited to use with attachment sleeves and that, if desired, an alternative form of air bag retention/diffuser attachment preparation can be used, such as those that include fastener devices such as screws or rivets, for example. Further, it is to be understood that, if desired, the invention can be practiced via the utilization of a cushion retainer, which device serves to retain an air bag (e.g., a cushion) within the assembly while minimizing or, preferably, avoiding the use of fasteners such as screws or rivets, but which in this case does not necessarily incorporate diffuser features therein. Also, it is to be understood that, if desired, the invention can be practiced both without the utilization of the referenced diffuser features and while making use of common forms of air bag attachment, such as the use of fasteners such as screws and/or rivets, for example.

As is known in the art, air bags in inflatable restraint systems can include one or more vent holes (not shown) therein whereby gases, such as produced via a gas generant material such as housed within the inflator chamber 106, can desirably be vented out of the air bag. Such air bag vent holes can advantageously assist in post deployment venting of the air bag both immediately after a crash event (e.g., as may be desired to soften the bag upon contact by a vehicle occupant thereby resulting in a greater cushioning effect and to reduce the likelihood or extent of rebound by such vehicle occupant upon such contact) and subsequent thereto (e.g., such as may be desired to facilitate the exiting from the vehicle by the occupant subsequent to the deployment event).

As perhaps more clearly seen by reference to FIGS. 2 and 3, the air bag 134 has a thickened peripheral edge 143. Such thickening of an air bag can take the form, as shown, of a hemmed loop 144 of air bag material at the gas inlet opening edge of the air bag into which a selected bead material 145 is placed to better ensure positive engagement of the air bag 134 into the assembly 105. The air bag retainer/diffuser device 140 includes a channel 146 thereabout into which channel the thickened peripheral edge of the air bag can be inserted so as to be in cooperative relation with said attachment sleeve preparation and thus secured to form an air bag/diffuser subassembly for joinder to the reaction canister body part, as shown and as described in detail in the above-referenced patent applications.

The bead material can suitably be fabricated from a wide range of materials such as metal or, preferably, plastic, especially an extruded thermoplastic and can take various shapes or forms to meet the needs of particular applications.

To assist in effecting desired air bag venting, the illustrated reaction canister body part 100 further includes canister vent holes 149 about the side wall connecting portions 116 and 118, respectively (see FIG. 3). Such canister vent holes allow for "behind the bag venting", whereby gas is vented from the canister in a rearward fashion thereby minimizing the likelihood of contact between the vented gas and the vehicle occupant. In addition, such canister vent holes permit a leveling off the breakout pressure, e.g., the pressure at which an air bag initially being deployed breaks out through the cover layer of the assembly, such as from the air bag retaining cavity and into the interior of the vehicle, for example.

In the illustrated embodiment, the reaction canister body part 100 forms gas cooling cavities 150 wherein vented gases can suitably be cooled. Further, as shown in FIG. 3, a thermal conductive material 151 can be placed within the cooling cavities 150 to assist in the cooling of, e.g., removal of heat from, the gases vented out from the air bag. Such a thermal conductive material preferably has a large surface and is capable of absorbing large amounts of heat while permitting the vented gas to be passed therethrough. The so positioned thermal conductive material thus functions to assist in retaining generated or resulting heat within the confines of the reaction canister and thus away from the vehicle occupant. For example, such a thermal conductive material can take the form of a metallic wool such as steel wool or, more preferably, due to the relatively greater heat conducting ability and lighter weight of aluminum, an aluminum wool.

As perhaps more clearly seen in conjunction with FIG. 3, the body part further includes protective cover retaining preparations 152, shown as taking the form of slots about the outer extremity of each of the side walls 110 and 112, respectively. A protective cover 154 such as of fiber reinforced paper, for example, can be included as a part of the air bag module assembly 105 in the form of a wrap joined to the reaction canister body part 100 about the air bag 134 within the air big retaining cavity 120 of the assembly. Such a protective cover 154 can be secured to the reaction canister body part 100 such as with an elastic band or other selected bead material 158 placed about the outer edge 160 of the protective cover 154, with the bead material secured within such a protective cover retainer slot preparation 152. Such a protective cover serves to help protect the air bag from damage such as by accidental or other undesired contact such as by or with other elements of the inflatable restraint system as well as extraneous elements in the environment to which the air bag can be exposed. Also, such a protective cover serves to desirably keep debris out of the reaction canister assembly.

In practice, such a protective cover is preferably fabricated of a tough, wear resistant material which, while normally tear resistant, can be preferably broken or ruptured at predetermined or selected sites such as through the aid of perforations therein. For example, such a protective cover can be fabricated of fiber reinforced paper, such as that sold by E.I. Du Pont de Nemours Co. under the name TYVEK. It is to be understood, however, that other appropriate materials such as having such described or preferred properties or characteristics can also be used.

Also, the reaction canister body part 100 includes a plurality of end closure attachment preparations 164. Such attachment preparations can take the form of a hollow or, as the body part is preferably prepared by extrusion fabrication, such attachment preparations can preferably take the form of a groove or what is commonly referred to in the extrusion field as a "screw slot." It is to be understood, however, that the attachment preparations and the form of attachment are not limited to the use of screw fasteners.

As shown, such attachment preparations 164 are preferably spaced about the periphery of the body part 100, both along the side walls 110 and 112, and about the inflator chamber 106, preferably about the exterior surface 107 thereof, so as to ensure secure attachment of end closures 170 (see FIG. 2) to the reaction canister body part 100 and preferably at least at each of the opposite ends 114 and 115 thereof. In general, the end closures 170 retain the cross sectional shape of the reaction canister body part 100.

In the air bag module assembly of the invention, the end closures can take the form of end plates such as with an integral inflator chamber base or, as may be preferred and as is shown in FIG. 2, a combination of end plates 174 (individually designated as 174A and 174B, respectively) and end bases 178 (individually designated as 178A and 178B, respectively). As will be described in more detail below, fasteners 180, such as swaging screw fasteners, such as made of appropriately hardened steel and which permits use in such pressure applications, can be used in securing such end closures in the assembly. Further, in one preferred embodiment of the invention and as illustrated in FIGS. 1-3, in order to simplify and reduce the number of parts required in the assembly, at least some of the fasteners can be used to simultaneously secure both end plates and end bases. Thus, the fasteners denominated 180A are used in simultaneously securing both end plates and end bases, while the fasteners denominated 180B are used to secure end plates and not end bases.

In such a design, the end plates 174 primarily serve to enclose the ends of the air bag retaining cavity formed by the reaction canister body part 100, while the end bases 178 primarily serve to enclose the ends of the integral inflator chamber 106 formed in the reaction canister body part 100 of the invention. The end bases 178 include a mating face 181 which upon assembly mates with the integral inflator chamber 106. That is, the mating face 181 properly receives one of the ends of the integrally shaped inflator chamber 106 to provide closure to the chamber 106. In such an assembly, end bases comprising thicker and/or stronger materials than used in the end plates will typically be preferred as the end closures at the inflator chamber will typically be subjected to significantly greater pressures than the end closures of the air bag retaining cavity. Similarly, the attachment preparations used for securing such end bases to the assembly typically must be able to withstand such significantly greater pressures. To this end, in the illustrated embodiment, the end closure attachment preparations for use in attaching such end bases to the reaction canister body part, e.g., the end closure attachment preparations designated 164A and generally in the form of four screw slots relatively equally spaced about the exterior surface 107 of the inflator chamber 106, and the fasteners used in combination therewith, i.e., the fasteners 180A, are of both a larger diameter and the fasteners are of a greater length than the end closure attachment preparations and fasteners, i.e., the preparations 164B and the fasteners 180B, that are used solely in securing end plates 174 to the reaction canister body part 100. Such a system and method of end closure attachment provides a relatively inexpensive, yet secure system and method for attaching end closures within the assembly to the reaction canister body part of the invention.

As will be appreciated, the number and location of such attachment preparations can be appropriately altered, as desired, to satisfy the needs of specific applications.

It is further to be understood, however, that the invention is not limited to use with such end closures or such means of attachment and that other forms of closure and means of attachment including swaging and welding processes such as inertial and M.I.G. welding, for example, can be used, as desired.

The reaction canister body part 100 can also include one or more mounting portions, generally designated by the reference numeral 184. Such mounting portions can be either of an external type, i.e., for mounting of the reaction canister body part within a selected vehicle, or an internal or semi-internal type, i.e., for mounting of items to or within the reaction canister body part. As is to be understood and as will be apparent to those skilled in the art, an external mounting portion, such as the mounting bracket 184A, can be appropriately positioned, orientated, shaped, and sized as desired to effect the desired result. Further, an internal or semi-internal type mounting portion, such as the mounting bracket 184B, can be extruded as a segment of a side wall, e.g., the side wall 112. Such a mounting bracket 184B can, for example, be used in the formation of a shielded cavity or recess 190 useful in distancing and shielding the air bag from fastening nuts or other elements (not shown) used in the reaction canister assembly.

The body part 100 is preferably fabricated by a continuous extrusion of an extrudable material, such as magnesium or, preferably, aluminum; which material is able to withstand the high temperatures and pressures to which such body part would typically be subjected to in such inflatable restraint system applications. Such extrusion fabrication of the body part permits and facilitates the incorporation into the design thereof, as needed or desired, of various design features and/or characteristics. As described above, such design features/characteristics can, for example, include as desired or needed one or more of the following: diffuser and/or air bag retainer attachment preparations, vent holes to facilitate desired gas venting, cooling cavities to permit desired gas cooling, protective cover retaining preparations to facilitate the retaining of a protective cover about the assembly, end closure attachment preparations whereby the attachment of end closures such as end plates or end plate/end base combinations to the reaction canister body part can be simplified, and mounting portions (both external, e.g., for mounting of the reaction canister body part within a selected vehicle, and internal or semi-internal, e.g., for mounting of items to or within the reaction canister body part).

Further, such extrusion fabrication of the body part permits the rapid fabrication of the body with the added advantage that the extrusion can be cut to varying lengths to permit incorporation thereof in variously sized assemblies.

The end closures, e.g., end plates and/or end plates with end bases, assist in maintaining the shape of the body part 100. In practice, such end closures may be made of the same material as the reaction canister body part, e.g., aluminum, and can be stamped, machined, formed or extruded, as desired.

In order to counteract the forces, described above, to which a reaction canister will typically be subjected to during air bag deployment and which forces can result in undesired bell mouthing of the reaction canister, which in turn can result in damage to the surrounding instrument panel structure or components, it is generally desirable that the reaction canister be relatively rigid. In practice, a reaction canister body part incorporating one or more of the features described above will have increase rigidity as a result of the shape and forms added to effect the incorporation of the features therein. It is to be understood, however, that if additional rigidity is desired, such rigidity can be provided to the assembly and the parts thereof such as through the addition of selected stiffening ridges or flanges, not shown, either as a part of the reaction canister body part extrusion or added thereto such as by welding.

Generally, the reaction canister body part of the invention will preferably be formed from one material and it will be preferred that the wall forming the inflator chamber will be thicker than the balance of the wall portions of the part, i.e., the thickness of the wall 192 will exceed the thickness of the top side wall 110 and the bottom side wall 112. Such thicker wall portions are better Suited to contain the relatively high gas generant pressures, e.g., 10342-20684 kPa (1500-3000 psi), such as would be expected to be produced therein with common pyrotechnic gas generant materials.

The swaging screw is a form of fastener that has been found to have particular utility in the practice of the invention. Swaging screw fasteners generally form or swage a thread into a fastener hole or other attachment preparation upon insertion. (The swaging process produces a removal torque in excess of 80% of the screw setting torque.) Such thread formation generally occurs as a result of a stretching or a displacement of the material, typically metal, into which it is inserted, as opposed to a general removal of such material as commonly occurs when using a conventional thread cutting screw fastener. Also, as the fasteners are for use in conjunction with component parts of a vehicular inflatable restraining system, the use of a thread cutting screw fastener can result in the formation of fine metal filings which are undesirable and not easily removed. In contrast, as described above, such metal filings are generally not created with swaging screw fasteners. The use of swaging screw fasteners allows the attachment preparations in the reaction canister body part of the invention to be formed by simple extrusion during the manufacture process, with the swaging screw fastener forming the threading during insertion.

As will be apparent to those skilled in the art and guided by the teachings provided herein, other forms of fasteners such as rivets, bolts, or other screw fasteners, for example, can, if desired, be used in the practice of the invention. A primary consideration in the selection of a fastener and the material of construction used therefore, however, is that the fastener can appropriately operate under the pressures to which it will be subjected, e.g., pyrotechnic inflators typically produce pressures in the range of 10342-20684 kPa (1500-3000 psi).

The provision of a reaction canister body part having an integral inflator chamber also both simplifies the manufacture and assembly of corresponding inflatable restraint modules and assures greater safety in operation as the disposition of the gas exit vents or ports in the inflator chamber is fixed relative to the reaction canister. Thus, the time and effort normally required in assembly to ensure that the gas exit vents are properly orientated, as well as the likelihood of incorrect orientation, such as due to misalignment of the gas exit vents, are virtually eliminated.

The invention illustratively disclosed herein suitably may be practiced in the absence of any element, part, step, component, or ingredient which is not specifically disclosed herein.

The foregoing detailed description is given for clearness of understanding only, and no unnecessary limitations are to be understood therefrom, as modifications within the scope of the invention will be obvious to those skilled in the art.

## Claims

1. An inflatable passive restraint system air bag module assembly (105) comprising a reaction canister having a trough-shaped integrally formed one-piece extruded body part (100) and a pack (109) of gas generant material,
wherein said body part (100) comprises first and second opposite side walls (110,112) defining an air bag retaining cavity (120) therebetween and a continuous circumference tubular chamber portion (106) of an inflator, said chamber portion (106) capable of withstanding a pressure of between 10342-20684 kPa (1500-3000 psi) and having gas exit vents (126) along at least one side thereof, said body part (100) also having first (114) and second (115) opposite ends with a plurality of end closure attachment preparations at each said , opposite end,
and wherein said gas generant pack (109) is not designed to contain high pressure produced during combustion of the gas generant material and is directly contained by the integral tubular chamber portion (106) of said body part (100).

2. The system of claim 1 wherein the fabrication of the body part (100) is of continuous aluminum extrusion.

3. The system of claim 1 or 2 wherein at least one of said side walls (110, 112) is continuously formed with said integrally shaped inflator chamber (106) via a side wall connecting portion (116, 118) and wherein said side wall connecting portion (116, 118) includes at least one vent hole (149) permitting venting of gas from an assembly incorporating the reaction canister body part (100).

4. The system of any preceding claim additionally comprising at least one gas cooling cavity (150).

5. The system of claim 4 wherein said cooling cavity (150) contains a thermal conductive material (151).

6. The system of claim 5 wherein said thermal conductive material (151) comprises aluminum wool.

7. The system of any preceding claim additionally comprising at least one integrally formed attachment sleeve preparation (142) adapted for the attachment of said body part (110) of at least one device selected from the group consisting of an air bag retainer, a diffuser, and an air bag retainer/diffuser (140).

8. The system of any preceding claim additionally comprising at least one integrally formed mounting portion (184A) of an external type for mounting of said reaction canister body part (100) into a vehicle.

9. The system of any preceding claim additionally comprising at least one integrally formed mounting portion (184B) forming a shielded cavity (190) within said reaction canister body part (100).

10. The system of any preceding claim additionally comprising at least one integrally formed protective cover (154) retaining preparation (152).

11. The system as claimed in any preceding claim and first and second end closures (170) attached to a respectively associated opposite end of said body part (100) by means positioned in cooperative relation with the respective end closure attachment preparations (164A, 164B), each of said first and second end closures (170) further having an inflator chamber base portion (178A, 178B) positioned to receive an associated one of the ends of the integrally shaped inflator chamber (106) of said body part (100).

12. The system of claim 11 wherein at least one of said end Closures (170) comprises an end plate (174A, 174B) and an end base (178A, 178B).

13. The system of claim 11 or 12 wherein at least one of said end closures comprises an end plate with an integral end base.

14. The system of any one of claims 11 to 13 additionally comprising an air bag retainer/diffuser (140) and wherein said body part (100) additionally comprises at least one integrally formed attachment sleeve preparation (142) adapted for the attachment of said air bag retainer/diffuser (140) to said body part (100).

15. The system of claim 14 wherein said air bag retainer/diffuser (140) is attached to said reaction canister body part (100) by insert means positioned in cooperative relation with said attachment sleeve preparation (142); and said first and second end closures (170) are attached to a respectively associated opposite end (114, 115) of said body part (100) by screw means (180A, 180B) positioned in cooperative relation with the respective end closure attachment preparations (164A, 164B).

## Patentansprüche

1. Airbagmodulanordnung (105) für ein aufblasbares passives Rückhaltesystem mit einem Reaktionsgehäuse mit einem trogförmigen einstückig geformten extrudierten einteiligen Körperteil (100) und einer Packung (109) eines gaserzeugenden Materials,
worin das Körperteil (100) erste und zweite einander gegenüberliegende Seitenwände (110, 112), die einen den Airbag haltenden Hohlraum (120) dazwischen begrenzen, und einen rohrförmigen Kammerabschnitt (106) einer Aufblaseinrichtung mit einem kontinuierlichen Umfang umfaßt, wobei der Kammerabschnitt (106) einem Druck zwischen 10 342 und 20 684 kPa (1500 bis 3000 psi) widerstehen kann und Gasausgangsöffnungen (126) entlang wenigstens einer Seite desselben hat und wobei das Körperteil (100) auch erste (114) und zweite (115) einander gegenüberliegende Enden mit mehreren Endverschlußbefestigungseinrichtungen an jedem dieser entgegengesetzten Enden hat,
und worin die gaserzeugende Packung (109) nicht geeignet ist, während der Verbrennung des gaserzeugenden Materials erzeugten hohen Druck zu enthalten, und direkt in dem einstückigen rohrförmigen Kammerabschnitt (106) des Körperteils (100) enthalten ist.

2. System nach Anspruch 1, bei dem die Herstellung des Körperteils (100) kontinuierliches Extrudieren von Aluminium ist.

3. System nach Anspruch 1 oder 2, bei dem wenigstens eine der Seitenwände (110, 112) kontinuierlich mit der einstückig geformten Aufblaseinrichtungskammer (106) über einen Seitenwandverbindungsabschnitt (116, 118) ausgebildet ist und worin der Seitenwandverbindungsabschnitt (116, 118) wenigstens ein Entgasungsloch (149) einschließt, welches ein Austreten von Gas aus einer Anordnung gestattet, die das Reaktionsgehäusekörperteil (100) aufweist.

4. System nach einem der vorausgehenden Ansprüche, das zusätzlich wenigstens einen Gaskühlhohlraum (150) umfaßt.

5. System nach Anspruch 4, bei dem der Kühlhohlraum (150) ein wärmeleitfähiges Material (151) enthält.

6. System nach Anspruch 5, bei dem das wärmeleitfähige Material (151) Aluminiumwolle umfaßt.

7. System nach einem der vorausgehenden Ansprüche, das zusätzlich wenigstens eine einstückig ausgebildete Befestigungsbuchsenvorrichtung (142) umfaßt, die für eine Befestigung des Körperteils (110) wenigstens einer Einrichtung ausgebildet ist, die unter einem Airbaghalter, einem Diffusor und einem Airbaghalter/Diffusor (140) ausgewählt ist.

8. System nach einem der vorausgehenden Ansprüche, das zusätzlich wenigstens einen einstückig ausgebildeten Befestigungsabschnitt (184A) eines äußeren Typs zur Befestigung des Reaktionsgehäusekörperteils (100) in einem Fahrzeug umfaßt.

9. System nach einem der vorausgehenden Ansprüche, das zusätzlich wenigstens einen einstückig ausgebildeten Befestigungsabschnitt (184B) umfaßt, der einen abgeschirmten Hohlraum (190) in dem Reaktionsgehäusekörperteil (100) bildet.

10. System nach einem der vorausgehenden Ansprüche, das zusätzlich wenigstens einen einstückig ausgebildeten Schutzdeckel (154) umfaßt, der die Vorrichtung (152) hält.

11. System nach einem der vorausgehenden Ansprüche mit ersten und zweiten Endverschlüssen (170), die jeweils an einem verbundenen entgegengesetzten Ende des Körperteils (100) mit Einrichtungen befestigt sind, die in zusammenwirkender Beziehung mit den jeweiligen Endverschlußbefestigungseinrichtungen (164A, 164b) positioniert sind, wobei jeder der ersten und zweiten Endverschlüsse (170) weiterhin einen Aufblaseinrichtungskammer-Basisabschnitt (178A, 178B) hat, der so positioniert ist, daß er ein verbundenes Ende der einstückig geformten Aufblaseinrichtungskammer (106) des Körperteils (100) aufnimmt.

12. System nach Anspruch 11, bei dem wenigstens einer der Endverschlüsse (170) eine Endplatte (174A, 174B) und eine Endbasis (178A, 178B) umfaßt.

13. System nach Anspruch 11 oder 12, bei dem wenigstens einer der Endverschlüsse eine Endplatte mit einer einstückig ausgebildeten Endbasis umfaßt.

14. System nach einem der Ansprüche 11 bis 13, das zusätzlich einen Airbaghalter/Diffuser (140) umfaßt und bei dem das Körperteil (100) zusätzlich wenigstens eine einstückig ausgebildete Befestigungsbuchsenvorrichtung (142) umfaßt, die für eine Befestigung des Airbaghalters/Diffusors (140) an dem Körperteil (100) ausgebildet ist.

15. System nach Anspruch 14, bei dem der Airbaghalter/Diffusor an dem Reaktionsgehäusekörperteil (100) durch eine Einsatzeinrichtung befestigt ist, die in zusammenwirkender Beziehung mit der Befestigungshülseneinrichtung (142) positioniert ist, und daß die ersten und zweiten Endverschlüsse (170) an einem jeweiligen verbundenen entgegengesetzten Ende (114, 115) des Körperteils (100) durch Schraubeneinrichtungen (180A, 180B) befestigt sind, die in zusammenwirkender Beziehung mit den jeweiligen Endverschlußbefestigungseinrichtungen (164A, 164B) positioniert sind.

## Revendications

1. Un ensemble modulaire à sac gonflable pour système de sécurité automatique (105) comportant un récipient métallique à réaction ayant une partie de corps extrudé monobloc (100) en forme d'auge et formée intégralement et un bloc (109) de matériau générateur de gaz,
dans lequel ladite partie de corps (100) comporte une première et une seconde parois latérales opposées (110, 112) qui définissent entre elles une cavité de retenue (120) pour sac gonflable et une partie de chambre tubulaire à circonférence continue (106) d'un gonfleur, ladite partie de chambre (106) étant capable de supporter une pression comprise entre 10342-20684 kPa (1500-3000 psi) et ayant des orifices de sortie de gaz (126) le long d'au moins un de ses côtés, ladite partie de corps (100) ayant de plus une première (114) et une seconde (115) extrémités opposées avec une pluralité de préparations de fixations d'obturation d'extrémité à chacune desdites extrémités opposées,
et dans lequel ledit bloc générateur de gaz (109) n'est pas conçu pour contenir la haute pression produite pendant la combustion du matériau générateur de gaz et est directement contenu par la partie de chambre tubulaire intégrale (106) de ladite partie de corps (100).

2. Le système selon la revendication 1, dans lequel la fabrication de la partie de corps (100) est une extrusion continue en aluminium.

3. Le système selon la revendication 1 ou 2, dans lequel au moins l'une desdites parois latérales (110, 112) est formée continuellement avec ladite chambre de gonfleur formée intégralement (106) par l'intermédiaire d'une partie de raccordement de paroi latérale (116, 118) et dans lequel ladite partie de raccordement de paroi latérale (116, 118) inclut au moins un trou de décharge (149) qui rend possible la décharge du gaz à partir d'un ensemble incorporant la partie de corps (100) du récipient métallique à réaction.

4. Le système selon l'une quelconque des revendications précédentes, comportant de plus au moins une cavité de refroidissement de gaz (150).

5. Le système selon la revendication 4, dans lequel ladite cavité de refroidissement (150) contient un matériau conducteur de chaleur (151).

6. Le système selon la revendication 5, dans lequel ledit matériau conducteur de chaleur (151) comprend de la paille d'aluminium.

7. Le système selon l'une quelconque des revendications précédentes, qui comporte de plus au moins une préparation à manchon d'attachement formée intégralement (142) adaptée pour attacher ladite partie de corps (110) d'au moins un dispositif sélectionné parmi le groupe comportant un élément de retenue pour sac gonflable, un diffuseur et un élément de retenue/diffuseur de sac gonflable (140).

8. Le système selon l'une quelconque des revendications précédentes, comportant de plus au moins une partie de montage formée intégralement (184A) d'un type extérieur pour le montage de ladite partie de corps (100) du récipient métallique à réaction dans un véhicule.

9. Le système selon l'une quelconque des revendications précédentes, comportant de plus au moins une partie de montage formée intégralement (184B) qui forme une cavité blindée (190) à l'intérieur de ladite partie de corps (100) du récipient métallique à réaction.

10. Le système selon l'une quelconque des revendications précédentes, comportant de plus au moins un recouvrement protecteur formé intégralement (154) qui retient la préparation (152).

11. Le système selon l'une quelconque des revendications précédentes et les première et seconde fermetures d'extrémité (170) attachées à une extrémité opposée respectivement associée de ladite partie de corps (100) par des moyens positionnés en relation coopérante avec les préparations d'attachement de fermetures d'extrémité respectives (164A, 164B), chacune desdites première et seconde fermetures d'extrémité (170) ayant de plus une portion de base de la chambre de gonfleur (178A, 178B) placée pour recevoir une des extrémités associées de la chambre de gonfleur formée intégralement (106) de la partie de corps (100).

12. Le système selon la revendication 11, dans lequel au moins une desdites fermetures d'extrémité (170) comporte une plaque d'extrémité (174A, 174B) et une base d'extrémité (178A, 178B).

13. Le système selon la revendication 11 ou 12, dans lequel au moins l'une desdites fermetures d'extrémité comporte une plaque d'extrémité avec une base d'extrémité intégrale.

14. Le système selon l'une quelconque des revendications 11 à 13, comportant de plus un élément de retenue pour sac gonflable/diffuseur (140) et dans lequel ladite partie de corps (100) comporte de plus au moins une préparation de manchon d'attachement formée intégralement (142) adaptée pour attacher ledit élément de retenue pour sac gonflable/diffuseur (140) sur ladite partie de corps (100).

15. Le système selon la revendication 14, dans lequel ledit élément de retenue pour sac gonflable/diffuseur (140) est attaché à ladite partie de corps (100) du récipient métallique à réaction par des moyens d'introduction placés en relation coopérante avec ladite préparation de manchon d'attachement (142) et lesdites première et seconde fermetures d'extrémité (170) sont attachées à une extrémité opposée respectivement associée (114, 115) de ladite partie de corps (100) par des moyens de vissage (180A, 180B) placés en relation coopérante avec les préparations de fixation de fermetures d'extrémités respectives (164A, 164B).
